(19) Europäisches Patentamt
European Patent Office
Office européen des brevets

(11) Publication number: 0 147 102 A2

# (12) EUROPEAN PATENT APPLICATION

(21) Application number: 84308454.2

(22) Date of filing: 05.12.84

(51) Int. Cl.⁴: A 01 N 59/26
A 01 N 37/02
//(A01N59/26, 37:02),
(A01N37/02, 37:02)

(30) Priority: 08.12.83 DE 3344328

(43) Date of publication of application: 03.07.85 Bulletin 85/27

(84) Designated Contracting States: AT BE CH DE FR GB IT LI LU NL SE

(71) Applicant: The Diversey Corporation
201 City Centre Drive
Mississauga Ontario L5B 2Z9(CA)

(72) Inventor: Martin, Heinrich
Friedensstrasse 4
D-6719 Kirchheimbolanden(DE)

(74) Representative: Smith, Sydney et al,
Elkington and Fife High Holborn House 52/54 High Holborn
London WC1V 6SH(GB)

## (54) A water-dilutable antimicrobial composition.

(57) The invention relates to a water-dilutable antimicrobial composition which is characterized by the following ingredients:

a) an inorganic and/or organic acid
b) acetic acid halogenated in the α-position,
c) an unbranched and/or branched aliphatic fatty acid.

In one preferred embodiment, the antimicrobial composition according to the invention contains the following ingredients:

a) a relatively high percentage of a mild inorganic and/or strong organic acid,
b) an acetic acid halogenated in the α-position,
c) small quantities of an unbranched and/or branched aliphatic fatty acid.

The invention also relates to the use of this antimicrobial composition in an aqueous use solution as a combined acidic cleaner and disinfectant.

EP 0 147 102 A2

# A water-dilutable antimicrobial composition

This invention relates to a water-dilutable antimicrobial composition which may be used in particular as a disinfectant for disinfecting industrial plants or installations.

The preferred field of application of the composition according to the invention is the disinfection of plant for the production, storage and blending of products which are sensitive to microbial contamination. More particularly, the plants or installations to be disinfected are plants or installations of the type used for the manufacture of foods, i.e. for example milk and milk products, non-alcoholic beverages and beer.

It is known from the prior art that plant used in the manufacture of foods is normally disinfected after cleaning.

In the case of relatively large or complicated installations, i.e. installations which are difficult to dismantle, for example those used in milk-processing factories and breweries, so-called CIP (cleaning in place) systems are being increasingly used for cleaning and disinfection. In this case, the installations are cleaned and disinfected in their operational, i.e. non-dismantled, state by pumping the chemicals in question or spraying them through permanently installed spray heads through all parts of the installation. After cleaning and disinfection, the chemicals are not discarded for reasons of cost, but instead are recovered and stored in so-called storage tanks. Between the individual operations, namely alkaline and acidic cleaning, disinfection, the installations are rinsed with water. For automatically and correctly returning the cleaners and disinfectants to their respective storage tanks, for monitoring the concentration and, optionally, for restrengthening purposes, it is necessary to have

a system which, by measuring a parameter substantially immune to variation, enables the individual chemicals to be differentiated and their respective concentrations to be determined. The parameter normally used for this purpose is conductivity which, for strongly alkaline and strongly acidic products, is considerably higher than that of water and is roughly proportional to concentration.

An obstacle to the use of strongly alkaline cleaners and disinfectants in breweries is the fact that, in the most important regions, the tanks to be disinfected still have a high $CO_2$ partial pressure of which the reduction, by pumping out the gas, is both time-consuming and expensive. The $CO_2$ as such also has a certain value. In cases where alkaline disinfectants are sprayed in a $CO_2$-containing tank of the type in question, the high solubility of $CO_2$ in alkalis leads to a drastic reduction in the pH-value of the liquid and, in some cases, to a reduction in pressure which, in the event of inadequate pressure equalization, even involves the danger of tank collapse. For the reasons explained above, acidic or acid-tolerant disinfectants are preferably used, particularly in breweries. Disinfectants of this type include products containing peracetic acid, so-called iodophores, i.e. products containing iodine bound in complex form, products based on quaternary ammonium compounds, products based on anionic surfactants and products based on α-halogen carboxylic acids and derivatives thereof, for example esters. Within this group, bromoacetic acid in particular plays a dominant role. There are also some commercially available products based on sulfuric acid/bromoacetic acid which have been available on the market for some years.

Literature on bromoacetic acid as a preservative and biocide includes Wallhäuser 1978, Ullmann 1974 and Römpp 1972.

The suitability for disinfection under acidic conditions of the anionic surfactants mentioned above is described, for example, in the standard textbooks by Block (1977) and Wällhauser (1978).

The hitherto known state-of-the-art products are not entirely satisfactory.

Thus, products based on peracetic acid, despite their good and comprehensive effect against all groups of microorganisms, are still attended by the disadvantage that they are not sufficiently conductive in themselves. Accordingly, their use in conductivity-controlled (CIP-installations) requires the parallel introduction of a mineral acid, such as phosphoric acid for example, to increase the conductivity of the utility solution.

Despite their considerable effectiveness, products based on iodophores are attended by the disadvantage that, on account of their iodine content, they are corrosive and discolor plastic components.

The disadvantage of quaternary ammonium compounds lies in the fact that their effect decreases drastically with increasing acidification, that foaming occurs and that they are difficult to rinse off the surfaces.

Anionic surfactants have a limited activity spectrum, i.e. they are hardly effective against yeasts and are not effective at all against spore formers. In addition, they have the disadvantage that, in general, they foam too vigorously.

Halogen carboxylic acids, particularly bromoacetic acid, have the disadvantage that they only show adequate effectiveness in conjunction with the highly corrosive sulfuric acid. Their use in conjunction with the less corrosive phosphoric acid leads unfavorably to a drastic reduction in effect, particularly against yeasts.

Accordingly, the object of the present invention is to provide an antimicrobial composition which is intended to be both acidic and highly effective, above all against

germs specific to brewing, such as yeasts, conductive in itself and, even in standard concentrations, considerably less corrosive than sulfuric acid.

According to the invention, this object is achieved by a water-dilutable antimicrobial composition which contains an inorganic acid and/or organic acid, an acetic acid halogenated in the α-position and an unbranched or branched aliphatic fatty acid.

In one preferred embodiment, the antimicrobial composition contains or consists of a mild mineral acid, such as phosphoric acid, a halogen acetic acid, for example bromoacetic acid, one or more aliphatic carboxylic acids of medium chain length, for example n-octanoic acid or n-decanoic acid, solubilizing agents for the fatty acids and, optionally, additives, such as complexing agents, dyes, defoamers and surface-active compounds.

The technical advance afforded by the product according to the invention lies in the fact that it is a highly effective, fast-acting antimicrobial composition which corresponds in its low corrosiveness to that of phosphoric acid, which has good intrinsic conductivity and which foams to a very limited extent only.

Accordingly, the product according to the invention is far superior to state-of-the-art products, as can be seen from the following comparison:

Table 1

| State-of-the-art product | Advantage of the product according to the invention |
|---|---|
| Basis peracetic acid | no additional conductive acid, longer shelf life of the use solution (reuseability) |
| Basis iodophores | less foam, no discoloration of plastic parts |
| Basis quaternary ammonium compounds | distinctly improved effectiveness less foam, better rinsability off surfaces, |
| Basis anionic surfactants | improved effectiveness, less foam |
| Basis halogen acetic acid and phosphoric acid | distinctly improved effectiveness |
| Basis halogen acetic acid and sulfuric acid | distinctly improved effectiveness, less corrosiveness. |

One preferred embodiment of the product according to the invention consists of the four components described in the following:

Component 1

Phosphoric acid or another, only slightly corrosive acid to establish the low pH-value required in the use

solution (1.8 - 2.5); phosphoric acid concentrations of from 20 to 70% in the concentrated, antimicrobial preparation are recommended, depending on the required dilution. It is important that the pH-value of the use solution should be below 2.5 and that conductivity should be high enough to differ clearly from that of the particular industrial water used at higher levels.

<u>Component 2</u>

Halogen acetic acid corresponding to the following formula

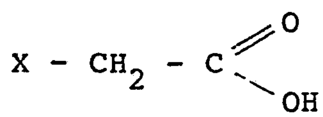

X = Cl,Br,I

The described compounds, particularly α-bromoacetic acid, show pronounced microbicidal activity and are the primary source of the disinfecting properties of the product according to the invention. Their concentration in the concentrate should be selected in such a way that at least 150 ppm are present in the aqueous use solution.

<u>Component 3</u>

Aliphatic carboxylic acids corresponding to the following general formula

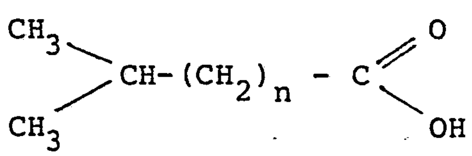

or

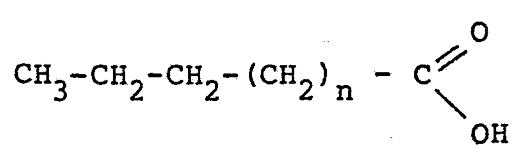

in which n preferably has a value of from 4 to 8, so that all intermediate stages from n-octanoic acid or iso-octanoic acid to n-dodecanoic acid or iso-dodecanoic acid are suitable foı use. Mixtures of all these acids may also be

used. They should be present in the product according to the invention in concentrations which, after dilution, give a total concentration of the fatty acids mentioned in the use solution of at least 5 ppm.

Component 4

The product according to the invention preferably contains one or more solubilizing agents of which the function is to dissolve the fatty acid mentioned under Component 3 both in the concentrated product and also in the use solution. By contrast, the microbicidal effect of the solubilizers as such is of secondary importance. Suitable solubilizers are any compounds from the class of anionic surfactants, for example alkylaryl sulfonates, cumene sulfonates, derivatives of diphenyl ether-disulfonate, α-olefin sulfonates, primary alkane sulfonates, fatty alcohol sulfates and alkylpolyglycol ether carboxylic acids.

In another preferred embodiment, the product according to the invention contains additional active ingredients and auxiliaries, particularly defoamers and/or complexing agents and/or dyes and/or surface-active compounds.

Embodiments of the product according to the invention are described by way of example in the following:

In the concentrate of the product according to the invention, the concentrations of the individual components preferably remain within the following limits:

| | | | |
|---|---|---|---|
| Phosphoric acid | 20 | - | 70% |
| α-halogen carboxylic acid | 3 | - | 10% |
| n- or iso-carboxylic acid, chain length 8 - 12 | 0.1 | - | 10% |
| Additives, such as defoamers, dyes, complexing agents, surface-active compounds | 0 | - | 5% |
| Water | 4 | - | 75% |

The product according to the invention should preferably be diluted in such a way as to give the following effective concentrations of the active ingredients in the use solution:

| | |
|---|---|
| Phosphoric acid | approx.2500 ppm |
| α-halogen carboxylic acid | approx.150 - 300 ppm |
| n- or iso-carboxylic acid, chain length 8 - 12 | approx. 5 - 20 ppm |
| Solubilizer | approx. 50 - 200 ppm |
| Additives | approx. 0 - 150 ppm |

Table 2 below shows the composition of four formulations exemplifying the product according to the invention and also the composition of four comparison formulations.

Table 2 *

| Ingredients | Formulations according to the invention | | | | Comparison formulations | | | |
|---|---|---|---|---|---|---|---|---|
| | 1 | 2 | 3 | 4 | 1 | 2 | 3 | 4 |
| Phosphoric acid | 37.5 | 37.5 | 37.5 | 37.5 | 37.5 | 37.5 | 37.5 | - |
| α-bromoacetic acid | 5 | 5 | 5 | 5 | 5 | - | - | 10 |
| n-octanoic acid | 0.15 | - | - | 0.15 | - | 0.15 | - | - |
| n-decanoic acid | 0.15 | 0.3 | - | 0.15 | - | 0.15 | - | - |
| Iso-nonanoic acid | - | - | 0.3 | - | - | - | - | - |
| Na-octyl sulfate | 1.5 | 1.5 | 1.5 | - | - | 1.5 | 1.5 | - |
| Na-decyl sulfate | 1.5 | 1.5 | 1.5 | - | - | 1.5 | 1.5 | - |
| α-olefin sulfonate (14 - 16) | - | - | - | 3.0 | - | - | - | - |
| Sulfuric acid | - | - | - | - | - | - | - | 67.5 |
| Water | 54.2 | 54.2 | 54.2 | 54.2 | 57.5 | 59.2 | 59.5 | 22.5 |

* Figures in % by weight

The superior effect of the products according to the invention compared with the comparison products for the same or reduced active ingredient content is apparent from Table 3. More particularly, it was found that the four formulations 1 - 4 according to the invention are almost equally effective against yeasts despite a very short contact time (5 minutes) and a low temperature (0°C).

Table 3

Microbicidal activity of the products according to the invention and comparison products

| Example | Comparison | Dilution | Concentration of the active components in the utility solution (ppm) | | Destruction rate in $\log_{10}$ after 5 mins. at 0°C | | |
|---|---|---|---|---|---|---|---|
| | | | α-bromoacetic acid | sum of the fatty acids | Saccharomyces cerevisiae | Staphylococcus aureus | Pseudomonas aeruginosa |
| 1 | | 0.5 % | 250 | 15 | 6.5 | 7 | 6.5 |
| 2 | | 0.5 % | 250 | 15 | 6.0 | not measured | not measured |
| 3 | | 0.5 % | 250 | 15 | 6.3 | not measured | not measured |
| 4 | | 0.5 % | 250 | 15 | 6.0 | not measured | not measured |
| | 1 | 0.5 % | 250 | - | <4 | not measured | not measured |
| | 2 | 0.5 % | - | 15 | <4 | not measured | not measured |
| | 3 | 0.5 % | - | - | <4 | not measured | not measured |
| | 4 | 0.5 % | 500 | - | 5 | not measured | not measured |

The product of Example 1 was also tested for its effectiveness against selected bacteria and proved to be extremely effective. By contrast, the individual components of the product according to the invention, i.e. α-bromoacetic acid (comparison formulation 1), a mixture of equal parts of n-octanoic acid and n-decanoic acid together with sodium octyl sulfate and sodium decyl sulfate as solubilizer (comparison formulation 2) and the solubilizer mixture alone (comparison formulation 3), are unsatisfactory in their effectiveness against yeasts for the same concentration of the active ingredients as in the product according to the invention.

It was surprisingly found that the various synergistic combinations of fatty acids and α-bromoacetic acid and also solubilizers which are described in Examples 1 to 4 according to the invention kill off at least 100 times as many yeasts as the respective individual components. Even the combination of bromoacetic acid-sulfuric acid (comparison formulation 4) which, hitherto, has been considered to be extremely effective and of which the principle disadvantage is in any case its high corrosiveness, shows comparatively unsatisfactory activity against yeast, even with twice the concentration of bromoacetic acid as in the product according to the invention.

Accordingly, the invention represents a surprisingly effective synergistic combination of individual microbicidally active substances which are distinguished from equal concentrations of the individual components by a superior destructive effect on yeasts and bacteria.

The invention also relates to the use of the antimicrobial composition according to the invention in aqueous solution as a combined acidic cleaner and disinfectant.

In addition, the invention relates in a preferred embodiment to a use of the composition in a use solution which is characterized in that, after alkaline and/or

acidic cleaning and rinsing with water, the aqueous antimicrobial solution is pump-circulated or sprayed in the installation to be disinfected either manually or in an automatic system, the solution being used at temperatures of from 0 to 75°C and the circulation or spraying times amounting to between 5 and 30 minutes, and in that, after disinfection, the installation is rinsed with water of drinking quality.

All the percentages quoted in this disclosure are percentages by weight.

The prior art literature is represented by the following publications:

- Block S.S.: Disinfection, Sterilization and Preservation
  2nd Ed., Lea & Febiger, Philadelphia 1977

- Ullmanns Enzyklpadie der technischen Chemie,
  Vol. 8, Verlag Chemie, Weinheim 1974,

- Neumüller o.-A.: Römpps Chemie Lexikon, 7th Edition,
  Franck'sche Verlagshandlung Stuttgart, 1972

- Wallhäuser K.H.: Sterilization, Desinfektion, Konservierung
  2nd Edition, Thieme Verlag, Stuttgart 1978

CLAIMS:

1. A water-dilutable antimicrobial composition characterized by the following ingredients:
a) an inorganic and/or organic acid,
b) acetic acid halogenated in the α-position,
c) an unbranched and/or branched aliphatic fatty acid.

2. An antimicrobial composition as claimed in claim 1, characterized in that it contains the following ingredients:
a) a relatively high percentage of a mild inorganic and/or strong organic acid,
b) an acetic acid halogenated in the α-position,
c) small quantities of an unbranched and/or branched aliphatic fatty acid.

3. An antimicrobial composition as claimed in claim 1 or 2, characterized in that it contains a solubilizing agent for the fatty acids.

4. An antimicrobial composition as claimed in at least one of the preceding claims, characterized in that it contains additives, such as complexing agents and/or dyes and/or defoamers and/or surface-active compounds.

5. An antimicrobial composition as claimed in at least one of claims 1 to 4, characterized in that it contains o-phosphoric acid as the acid component.

6. An antimicrobial composition as claimed in at least one of claims 1 to 5, characterized in that it contains α-chloroacetic acid, α-bromoacetic acid or α-iodoacetic acid as the α-halogen acetic acid.

7. An antimicrobial composition as claimed in at least one of claims 1 to 6, characterized in that it contains small quantities of an n- or iso-aliphatic fatty acid containing from 8 to 12 carbon atoms.

8. An antimicrobial composition as claimed in any of claims 3 to 7, characterized in that it contains a fatty alcohol sulfate, an α-olefin sulfonate, a primary alkane sulfonate, an N-alkyl derivative of diphenyl ether disulfonates or an alkylpolyglycol ether carboxylic acid as the solubilizing agent.

9. An antimicrobial composition as claimed in claim 8, characterized in that it contains fatty alcohol sulfate solubilizers in which the alkyl radical has a chain length of from 8 to 10.

10. A composition as claimed in any of claims 1 to 9 in the form of an in use solution.

11. An antimicrobial composition as claimed in claim 5, characterized in that, as a use solution, it contains at least the following components:

a) enough acid to ensure a pH-value below 2.5,
b) at least 150 ppm of an α-halogen acetic acid,
c) at least 5 ppm of an N- or iso-aliphatic fatty acid containing from 8 to 12 carbon atoms,
d) at least 50 ppm of a solubilizer for the fatty acid,
e) additives, namely dyes, defoamers, complexing agents and surface-active compounds.

12. The use of the antimicrobial composition claimed in at least one of claims 1 to 9 in an use solution, characterized in that it is used in aqueous solution as a combined acidic cleaner and disinfectant.

13. The use of the antimicrobial composition claimed in at least one of claims 1 to 9 in an use solution, characterized in that, after alkaline and/or acidic cleaning and intermediate rinsing with water, the aqueous antimicrobial solution is pump-circulated or sprayed in the plant to be disinfected either by hand or in an automatic system, the solution being used at a temperature of from 0 to 75$^{\circ}$C and the pump-circulation or spraying times amounting to between 5 and 30 minutes, and in that, after disinfection, the plant is rinsed with water of drinking quality.

14. A method of cleaning installations, in particular in those used in milk processing and breweries, by the cleaning-in-place method characterized in that an in use solution as claimed in claim 10 is used.